Europäisches Patentamt

European Patent Office

Office européen des brevets

(11) Veröffentlichungsnummer : **0 017 650 B1**

(12) **EUROPÄISCHE PATENTSCHRIFT**

(45) Veröffentlichungstag der Patentschrift :
20.04.83

(21) Anmeldenummer : **80890041.9**

(22) Anmeldetag : **09.04.80**

(51) Int. Cl.³ : **C 12 C 11/04**

(54) Vorrichtung zur Herstellung von Bier.

(30) Priorität : **09.04.79 AT 2639/79**

(43) Veröffentlichungstag der Anmeldung :
**15.10.80 Patentblatt 80/21**

(45) Bekanntmachung des Hinweises auf die Patenterteilung : **20.04.83 Patentblatt 83/16**

(84) Benannte Vertragsstaaten :
**BE CH DE FR GB IT LI LU NL SE**

(56) Entgegenhaltungen :
**FR A 2 250 884**
**GB A 1 490 069**
**US A 4 137 612**

(73) Patentinhaber : **BRAUPATENT UNIVERSAL AG**
**Grenzacherstrasse 79**
**CH-4002 Basel (CH)**

(72) Erfinder : **Kühtreiber, Franz, Dr. Dipl.-Ing.**
**Marktplatz 26a**
**A-2136 Laa an der Thaya (AT)**

(74) Vertreter : **Binder, Otto, Dipl.-Ing.**
**Stallburggasse 2**
**A-1010 Wien (AT)**

Jouve, 18, rue St-Denis, 75001 Paris, France

Vorrichtung zur Herstellung von Bier

Die Erfindung betrifft eine Vorrichtung zur Herstellung von Bier mit einer auf der Oberfläche der Bierwürze bzw. des Jungbieres bzw. des Bieres schwimmenden, aus einer Vielzahl von kugelförmigen Schwimmkörpern bestehenden Abdeckung.

Die DE-C-634 751 befaßt sich im wesentlichen mit einem Mittel zur Förderung der Biergärung und sieht zu diesem Zweck vor, daß eine Vielzahl voneinander unabhängiger vergleichsweise kleiner Körper, z. B. aus Holz, Kork, Pech oder Metallkugeln bis herab zur Mehlform auf das Bier aufgebracht werden oder auf der Würze schwimmen und dann gegebenenfalls zu Boden sinken. Durch das Einstreuen solcher kleiner Teilchen insbesondere mit rauher Oberfläche kommt es zu einer Entbindung der Kohlensäure und zu einer Förderung der Gärung bzw. zu einer Vermehrung der Ausscheidungen.

Demgegenüber ist es das Ziel vorliegender Erfindung, mittels auf der Oberfläche der Bierwürze bzw. des Jungbieres bzw. des Bieres schwimmender Schwimmkörper zunächst während der Flotation bzw. während der Gärung das Zurücksinken des sich an der Oberfläche sammelnden Schaumes zu verhindern, welcher aus der Würze ausgeschiedene, bitter schmeckende Substanzen enthält. Später soll ferner das Jungbier bzw. das Bier gegen einen Kontakt mit der allenfalls im Behälter befindlichen sauerstoffhaltigen Luft weitestgehend abgeschirmt werden.

Diese Ziele der Erfindung werden nun ihrem wesentlichsten Merkmal zufolge dadurch erreicht, daß die Schwimmkörper zwecks Beibehaltung einer stabilen Schwimmlage einen exzentrischen Schwerpunkt aufweisen.

Die Erfindung beruht nämlich in diesem Zusammenhang auf der Erkenntnis, daß der angestrebte Effekt, die Abscheidung der mit dem Flotations- und/oder Gärschaum an die Oberfläche der Flüssigkeit aufsteigenden Substanzen, nur dann einwandfrei gewährleistet werden kann, wenn sichergestellt wird, daß diese Schwimmkörper eine stabile Schwimmlage beibehalten. Die sich aus dem Gärschaum auf der Oberseite dieser Schwimmkörper absetzenden Substanzen würden nämlich bei einer Lageänderung, z. B. einer Drehung kugelförmiger Schwimmkörper, wieder in die Würze bzw. das Jungbier eingetragen werden.

Um eine möglichst weitgehende Abscheidung der sogenannten Flotations- und/oder Kräusensubstanzen zu erzielen, ist es nach einem weiteren Erfindungsmerkmal von Vorteil, wenn die Schwimmkörper ein solches mittleres spezifisches Gewicht besitzen, daß sie etwa zur Hälfte eintauchen.

Die Verwendung der erfindungsgemäßen Einrichtung ermöglicht erstmals die Herstellung von Bier von der Flotation bis zum Abschluß der Nachgärung in hohen, geschlossenen Großbehältern, wobei Flotation, Haupt- und Nachgärung im selben Behälter durchgeführt werden können.

Die Schwimmkörper können bedarfsweise in einer oder mehreren Lagen im Behälter vorgesehen sein.

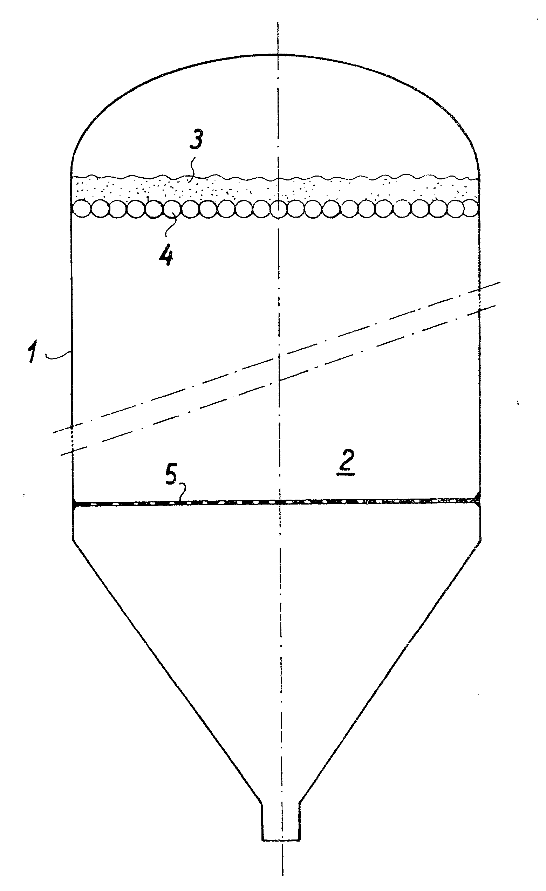

Die einzige Zeichnungsfigur zeigt schematisch ein Ausführungsbeispiel des Erfindungsgegenstandes.

Im einzelnen zeigt diese Zeichnungsfigur einen Behälter 1, der Bierwürze bzw. Jungbier bzw. Bier 2 enthält, also eine Flüssigkeit, die einer Flotation, Gärung bzw. Nachgärung zu unterziehen ist, wobei sich Schaum entwickelt.

Auf der Oberfläche dieser Flüssigkeit 2 schwimmt eine aus Kugeln 4 mit exzentrischem Schwerpunkt bestehende Schicht, welche den sich beim Gären bildenden Schaum 3 gegen die Flüssigkeit 2 abschirmt und auf der sich die Feststoffe des Schaumes ablagern. Die Kugeln 4 besitzen ein spezifisches Gewicht, welches derart bemessen ist, daß sie etwa zur Hälfte eintauchen, demnach ein spezifisches Gewicht von etwa 0,5 g/cm³. Dank des exzentrischen Schwerpunktes dieser Kugeln 4 halten sie sich auch beim Auftreten von Strömungen, etwa bei der Gärung der Bierwürze, in stabiler Schwimmlage.

Die auf der freien Oberseite der Kugeln 4 abgesetzten Feststoffe der Gärschaumschicht können nach dem Entleeren des Behälters 1 im Zuge der Reinigung dieses Behälters ohne zusätzlichen Aufwand von den Kugeln abgewaschen werden.

Versuchsweise wurde ein Großbehälter mit einem Fassungsvermögen von 63.000 l mit Bierwürze gefüllt und die freie Oberfläche dieser zur Gärung gebrachten Würze wurde mit einer Schicht schwimmfähiger Kugeln mit exzentrischem Schwerpunkt und einem mittleren spezifischen Gewicht von etwa 0,5 g/cm³ und einem Durchmesser von 200 mm derart bedeckt, daß diese Kugeln einander durchwegs tangierten, so daß die tatsächlich freie Oberfläche der Würze auf ein Minimum beschränkt wurde.

Diese aus Kugeln bestehende geschlossene Schicht bildete während der Flotation, der anschließenden Gärung und auch während der Nachgärung der Würze bzw. des Jungbieres eine exakte Trennschicht zwischen der Flüssigkeit und dem Flotations- bzw. Gärschaum. Die festen Bestandteile des Schaumes lagerten sich auf den aus der gärenden Würze bzw. dem Jungbier herausragenden Kugelhälften in dicken, bräunlichen, widerlich schmeckenden Krusten ab, die nach Vollendung des Gärungs- und eventuell auch des Lagerungsvorganges und Entleerung des Gärbehälters von den Kugeln leicht abgewaschen werden konnten.

Würden die Schwimmkörper 4 bei einer Entleerung des Behälters 1 bis auf den Behälterboden absinken, dann würden sie dadurch in einem konischen Behälterboden zusammengedrängt und auf ihrer Oberfläche befindliche Absetzungen könnten sich dadurch vorzeitig abreiben und die Flüssigkeit verunreinigen. Bei Behältern mit ebenen Böden würden die sich im Bodenbereich absetzenden Schwimmkörper 4 das Ausräumen der sich dort ablagernden Hefe behindern.

Es ist deshalb gemäß einem weiteren Erfindungsmerkmal vorgesehen, im Behälter 1 in einem ausreichenden Abstand vom Behälterboden einen Rost 5 anzuordnen, auf dem sich die Schwimmkörper 4 bei einer Entleerung des Behälters 1 absetzen können.

## Ansprüche

1. Vorrichtung zur Herstellung von Bier mit einer auf der Oberfläche der Bierwürze bzw. des Jungbieres bzw. des Bieres schwimmenden, aus einer Vielzahl von kugelförmigen Schwimmkörpern bestehenden Abdeckung, dadurch gekennzeichnet, daß diese Schwimmkörper (4) zwecks Beibehaltung einer stabilen Schwimmlage einen exzentrischen Schwerpunkt aufweisen.

2. Vorrichtung nach Anspruch 1, dadurch gekennzeichnet, daß die Schwimmkörper (4) ein **mittleres spezifisches Gewicht von etwa 0,5 g/cm³ besitzen, so daß sie etwa zur Hälfte eintauchen.**

3. Vorrichtung nach Anspruch 1 oder 2, dadurch gekennzeichnet, daß die Schwimmkörper in einer oder mehreren Lagen übereinanderliegend angeordnet sind.

4. Vorrichtung nach einem der Ansprüche 1 bis 3, dadurch gekennzeichnet, daß im Abstand vom Boden des die Schwimmkörper (4) aufnehmenden Behälters (1) ein Rost (5) angeordnet ist, auf dem sich die Schwimmkörper (4) bei einer Entleerung des Behälters (1) absetzen können.

## Claims

1. Apparatus for making beer with a cover composed of a multiplicity of spherical floating corpuscles which swims in the surface of the beer wort, the fresh beer or the beer, characterized by the fact that these swimming corpuscles (4) have an excentric centre of gravity in order to maintain a stable swimming position.

2. Apparatus according to claim 1, characterized by the fact that these swimming corpuscles (4) have an average specific weight of 0,5 g/cm³ so that they are approximately half submerged.

3. Apparatus according to claim 1 or 2, characterized by the fact that the swimming corpuscles are ordered in one or more superposed layers.

4. Apparatus according to claim 1 to 3, characterized by the fact that at some distance from the bottom of the reservoir (1) which contains the swimming corpuscles (4) there is a grating (5) on which the swimming or floating corpuscles can drop down when the reservoir is being emptied.

## Revendications

1. Dispositif pour la préparation de la bière avec un recouvrement composé d'une multiplicité des corps flottants sphériques qui flotte à la surface du moût de bière ou de la nouvelle bière ou de la bière, caractérisé par le fait que ces corps flottants (4) pour pouvoir conserver un flottement stable ont un centre de gravité excentrique.

2. Dispositif suivant la revendication 1, caractérisé par le fait que les corps flottants (4) ont un **poids spécifique moyen d'approximativement 0,5 g/cm³ de sorte qu'ils sont immergés de moitié.**

3. Dispositif suivant la revendication 1 ou 2, caractérisé par le fait que les corps flottants sont disposés en une ou plusieurs couches, reposant l'une sur l'autre.

4. Dispositif suivant la revendication ou l'une des revendications 1 à 3, caractérisé par le fait qu'à une certaine distance du fond du réservoir (1) qui contient les corps flottants (4) est disposée une grille (5) sur laquelle les corps flottants (4) peuvent se déposer à l'occasion d'une vidange du réservoir (1).